# EUROPEAN PATENT APPLICATION

(11) **EP 2 474 504 A1**
(43) Date of publication of application: **11.07.2012**
(21) Application number: 10813751.4
(22) Date of filing: 02.09.2010
(51) Int. Cl.: C01B 33/035, C01B 31/04

(54) **SEED HOLDING MEMBER AND METHOD FOR PRODUCING POLYCRYSTALLINE SILICON USING THE SEED HOLDING MEMBER**

(30) Priority: 02.09.2009 JP 2009202389
(71) Applicant: Toyo Tanso Co., Ltd., Osaka-shi Osaka 555-0011 (JP)
(72) Inventor: ISHIZAKI, Jun, Osaka-shi Osaka 530-0001 (JP); IZUMIYA, Masaki, Kanonji-shi Kagawa 769-1612 (JP)
(74) Representative: Glawe, Delfs, Moll
(86) International application number: PCT/JP2010/064986
(87) International publication number: WO 2011/027803

(57) **Abstract**

A seed retaining member has a recessed portion for breaking and separating formed at an arbitrary location and thereby allows stress concentration to occur at the recessed portion when applying a breaking load, to enable the seed retaining member to break with a smaller load than conventional. A seed retaining member and method of manufacturing polycrystalline silicon using the seed retaining member are provided, that can prevent a crack from propagating in an unintended location in the seed retaining member by allowing the crack to propagate along the recessed portion, and can reduce a workload in a separation work of the seed retaining member and polycrystalline silicon.

A seed retaining member (6) for retaining a lower end portion of a seed (4) serving as a seed rod is made of graphite and disposed at a bottom portion of a furnace for producing polycrystalline silicon by a Siemens method. A groove (16) for breaking and separating is formed in an outer peripheral surface of the seed retaining member (6). The seed retaining member (6) has a columnar base portion (6a) having a first fitting hole (10) for inserting an electrode portion (5), a cylindrical body portion (6b) having a smaller diameter than the base portion (6a), and a conical frustum-shaped tip portion (6c) joined to the body portion (6b) and having a second fitting hole (13) for inserting a lower end portion of the seed (4).

## Description

### TECHNICAL FIELD

The present invention relates to a seed retaining member, disposed in a furnace for manufacturing polycrystalline silicon by a Siemens method, for retaining a lower end portion of a silicon core material (seed) serving as a seed rod, and a method of manufacturing polycrystalline silicon using the seed retaining member.

### BACKGROUND ART

Conventionally, high-purity polycrystalline silicon, which serves as a semiconductor material, is mainly produced by a Siemens method (see Patent Document 1 below). Specifically, a plurality of inverted-U shaped silicon core materials (hereinafter referred to as "seed"s) each serving as a seed rod are provided upright in a reaction furnace for producing polycrystalline silicon, and both end portions of the seed are supported on electrodes at the furnace bottom portion via seed retaining members. Electric current is applied to the seed via the electrodes and the seed retaining members. By applying electric current through the seed in this way, the seed is heated to a high temperature, and chlorosilanes and hydrogen in the furnace are caused to react with each other to deposit polycrystalline silicon on the surface of the seed. This reaction proceeds, resulting in growth of polycrystalline silicon rods.
Thus, after depositing the polycrystalline silicon, the seed retaining members are broken to take the seed on which polycrystalline silicon has been deposited out of the furnace, and thereafter, a separating work between the seed retaining members and the polycrystalline silicon is carried out to obtain the polycrystalline silicon.

### CITATION LIST

### [PATENT DOCUMENTS]

[Patent Document 1]
   Japanese Patent No. 2867306

### SUMMARY OF THE INVENTION

### PROBLEMS TO BE SOLVED BY THE INVENTION

As described above, the work of breaking the seed retaining member is necessary after depositing polycrystalline silicon. However, the breaking load required for breaking the seed retaining member is very high because the strength of the seed retaining member is high. In addition, because of the risk of contamination to the deposited polycrystalline silicon, breaking-and-separating work using an impact of hurling something cannot be employed, so the work is conducted manually by hand, one by one. For this reason, the breaking-and-separating work of the seed retaining member has been a heavy burden on the manufacturers.

The present invention has been accomplished in view of the foregoing circumstances. It is an object of the invention to provide a seed retaining member that enables the breaking-and-separating work with a smaller load than conventional and can reduce the workload by forming a recessed portion for breaking and separating at an arbitrary location in a seed retaining member surface so that stress concentration is caused at the recessed portion when applying a breaking load, and to provide a method of manufacturing polycrystalline silicon using the seed retaining member.

### MEANS FOR SOLVING THE PROBLEMS

In order to accomplish the foregoing object, the present invention provides a seed retaining member, made of graphite and attached to an electrode portion disposed at a bottom portion of a furnace for producing polycrystalline silicon by a Siemens method, for retaining a lower end portion of a seed serving as a seed rod, characterized by having a recessed portion for breaking and separating, formed at an arbitrary location in an outer peripheral surface thereof. Herein, the term "outer peripheral surface" means a side face of the seed retaining member under the situation in which a seed is retained by the seed retaining member. By forming the recessed portion, a portion with a low strength can be formed intentionally at a desired location. Herein, the term "recessed portion" means a concept including recess, hole, and groove. The number and size of the recesses or holes may be determined as needed in order to obtain a desired strength. The strength of the seed retaining member can be reduced to a required value by forming recesses and holes. This makes it possible to cause stress concentration at the recessed portion when applying a breaking load, and to carry out the breaking-and-separating work with a smaller load than conventional.

More preferably, the recessed portion may be formed by a groove for breaking and separating.
By forming the groove for breaking and separating in the outer peripheral surface of the seed retaining member as described above, stress concentration is caused at the groove when applying a breaking load, so it is made possible to carry out the breaking-and-separating work with a smaller load than conventional.

The shape of the seed retaining member is not particularly limited. The groove depth, the groove shape, and the like of the groove for breaking and separating are not particularly limited either, but the groove needs to be formed at such a degree that stress concentration is caused when applying a load. It is preferable that the height direction-wise location at which the groove is formed be in a region below the portion in which the polycrystalline silicon deposited on the seed surface has grown so as to cover the tip portion surface of the seed retaining member. One primary reason is that, if the polycrystalline silicon deposited on the seed surface grows in such a manner as to cover the tip portion of the seed retaining member and consequently also cover the groove for breaking and separating, stress concentration is not applied to the groove when applying a breaking load so the advantageous effects of the invention may not be obtained. It is more preferable that the groove for breaking and separating be formed more than 30 mm below the tip of the seed retaining member. The reason is that it is rare to carry out the deposition work until the deposited polycrystalline silicon crystal grows to cover the seed retaining member more than 30 mm.

In addition, the groove for breaking and separating may extend along the circumference of the seed retaining member (in other words, the groove for breaking and separating may exist within a plane inclined with respect to the axial center of the seed retaining member), or more preferably, the groove for breaking and separating may exist within a plane perpendicular to the axial center of the seed retaining member. The reason is that this is easiest to carry out the formation process of the groove for breaking and separating. For example, as a method of the formation process of the groove for breaking and separating, the groove for breaking and separating can be formed by a simple process work of pressing a cutting tool against the seed retaining member and rotating the seed retaining member.
With the conventional breaking-and-separating work of the seed retaining member, the location of the crack and the propagation direction of the crack vary widely. For that reason, the crack often propagates in the location in which the poly crystalline silicon crystal deposited on the seed surface has grown to cover the surface of the seed retaining member surface. When the fragments of the seed retaining member and the silicon crystal adhering to each other are produced, separating work between polycrystalline silicon and the seed retaining member must be carried out separately also for such fragments, which adds an extra work burden. By forming the groove for breaking and separating on the surface of the seed retaining member, stress concentration occurs at the groove when applying a breaking load, causing a crack. The crack propagates along the groove. By designing the location of the groove for breaking and separating and the direction in which the groove extends such as to match specific situations, the existing problems can be alleviated.

The circumference-wise formation region of the groove for breaking and separating may be either the entire circumference or a portion thereof. Generally, a breaking load is applied to the seed retaining member so that it is broken in a certain direction. For this reason, when the groove for breaking and separating is formed only in a portion, it is preferable that the seed retaining member is disposed so that the groove exists on the side of the direction in (which the breaking load is applied (i.e., the load moment). The reason is that when applying a breaking load, the stress concentration can be utilized most effectively at the groove for breaking and separating and the seed retaining member can be broken with a smaller load than conventional. Foaming the groove for breaking and separating only partially is especially affective when the outer diameter of the seed retaining member is small. Forming the groove for breaking and separating only partially serves to maintain the strength of the seed retaining member and at the same time to prevent the portion where the groove for breaking and separating has been formed from excessive voltage when electric current is passed therethrough, preventing the problem of overheating. If the strength of the seed retaining member is lowered excessively by forming the groove, it may be fractured by an unintended impact. In addition, if overheating takes place in a portion of the seed retaining member, the heat may cause silicon crystal to melt.

It is preferable that a tip of the seed retaining member be formed in a conical frustum shape. Such a structure makes the work of taking the seed retaining member out of the silicon crystal covering the tip of the seed retaining member easier because the amount of the graphite is less than that in the case where the tip is kept in a columnar shape. It is possible that the tip portion of the seed retaining member may be thinner than the portion where the groove for breaking and separating has been formed, but the overheating problem does not arise because electric current flows to the seed when applying electric current.

In addition, in order to accomplish the foregoing object, the present invention also provides a method of manufacturing polycrystalline silicon as described below. The method, according to the invention, of manufacturing polycrystalline silicon comprises the steps of: attaching a seed retaining member to an electrode portion disposed at a bottom portion of a furnace for manufacturing polycrystalline silicon, the seed retaining member having a recessed portion for breaking and separating that has been formed in advance at an arbitrary location in an outer peripheral surface of a seed retaining member for retaining a lower end portion of a seed serving as a seed rod; depositing polycrystalline silicon on a surface of the seed; after depositing polycrystalline silicon on the surface of the seed, breaking the seed retaining member at the recessed portion and taking the seed on which the polycrystalline silicon has been deposited out of the furnace; and performing a separation work of the seed retaining member and the polycrystalline silicon from the seed that has been taken out of the furnace. It is preferable that recessed portion be a groove for breaking and separating.

Another method, according to the invention, of manufacturing polycrystalline silicon comprises the steps of: attaching a seed retaining member to an electrode portion disposed at a bottom portion of a furnace for manufacturing polycrystalline silicon, the seed retaining member having a recessed portion for breaking and separating that has been formed in advance at an arbitrary location in an outer peripheral surface of a seed retaining member for retaining a lower end portion of a seed serving as a seed rod; depositing polycrystalline silicon on a surface of the seed; after the depositing of polycrystalline silicon, removing the seed retaining member retaining the seed from the electrode portion and taking the seed retaining member retaining the seed out of the furnace; and after taking the seed retaining member retaining the seed out of the furnace, breaking the seed retaining member retaining the seed at the recessed portion to perform a separation work of the seed retaining member and the polycrystalline silicon. It is preferable that recessed portion be a groove for breaking and separating.

### ADVANTAGES OF THE INVENTION

According to the present invention, the groove for breaking and separating is formed at an arbitrary location of the outer peripheral surface of the seed retaining member. Thereby, stress concentration is caused at the groove when applying a breaking load, and the breaking-and-separating work can be carried out with a smaller load than conventional.

### BRIEF DESCRIPTION OF THE DRAWINGS

[Fig. 1] Fig. 1 is a schematic view illustrating a manufacturing apparatus used for the method of manufacturing polycrystalline silicon according to the present invention.
[Fig. 2] Fig. 2 is a plan view illustrating a seed retaining member used for the manufacturing apparatus of Fig. 1.
[Fig. 3] Fig. 3 is a cross-sectional view taken along line A1-A1 in Fig. 2.
[Fig. 4] Fig. 4 is a view illustrating a crack condition when breaking the seed retaining member.
[Fig. 5] Fig. 5 is a view illustrating the configuration of an experiment, example.
[Fig. 6] Fig. 6 is a graph illustrating the relationship between groove depth and breaking load.
[Fig. 7] Fig. 7 is a schematic view illustrating the condition in which fragments containing the seed retaining member and silicon crystal are produced when breaking a conventional seed retaining member.

### DESCRIPTION OF EMBODIMENTS

Hereinbelow, the present invention will be described based on the preferred embodiments. It should be noted that the present invention is not limited to the following embodiments.

### (Embodiment 1)

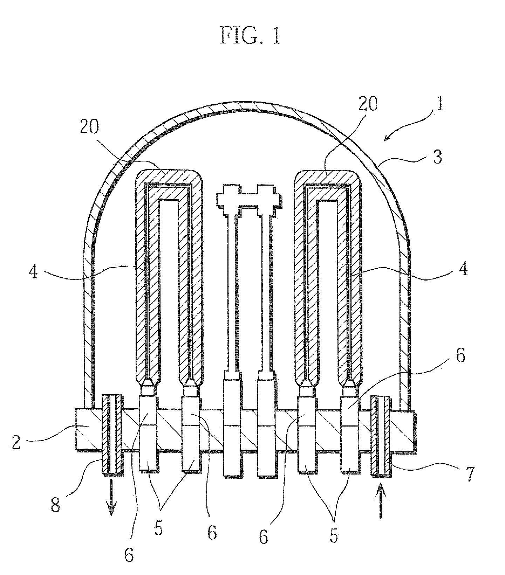

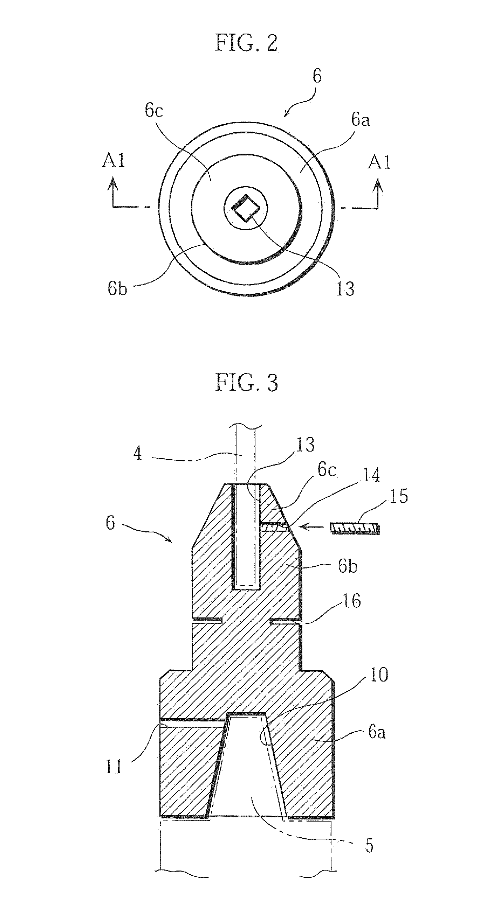

Fig. 1 is a schematic view illustrating a manufacturing apparatus used for the method of manufacturing polycrystalline silicon according to the present invention, Fig.2 is a plan view illustrating a seed retaining member used for the manufacturing apparatus of Fig. 1, and Fig. 3 is a cross-sectional view taken along line AI-AI in Fig. 2. As illustrated in Fig. 1, a reaction furnace 1 is provided with a bell jar 3 so as to cover a furnace bottom 2, and the interior thereof is hermetically sealed. In the furnace, a plurality of inverted-U shaped silicon core materials 4 (hereinafter referred to as "seed"s) each serving as a seed rod are provided upright, and both end portions of each of the seeds 4 are supported on electrode portions 5 at the furnace bottom portion via seed retaining members 6. Specifically, a seed retaining member 6 made of graphite (which may be either isotropic graphite or anisotropic graphite) is fitted at the tip of the electrode portion 5, and a lower end portion of the seed 4 is inserted into the seed retaining member 6. A nuzzle 7 for supplying a source gas toward the seeds 4 in the furnace and an exhaust port 8 for discharging the emission gas in the furnace are provided in the furnace bottom 2. In Fig. 1, reference numeral 20 indicates a portion where silicon has been deposited on the surface of the seed 4.

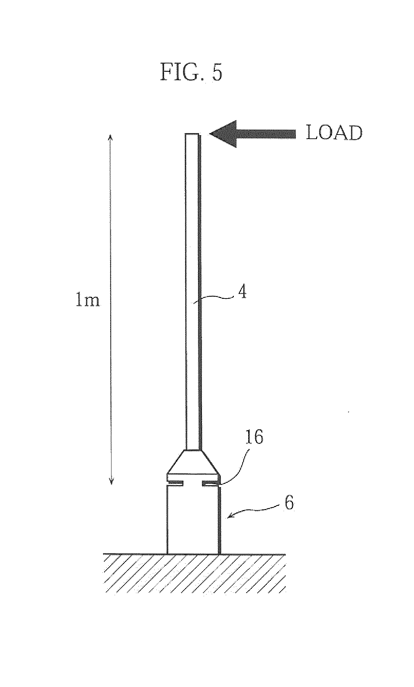

There are various kinds of shapes of the seed retaining member 6, such as the one as shown in Fig. 3, in which the electrode fitting portion (which corresponds to a later-described base portion 6a) is thick, and the one as shown in Fig. 5 and used in the later-described experiment, which has a columnar shape with a constant diameter. The present embodiment illustrates the one with the shape shown in Fig. 3. Specifically, the seed retaining member 6 comprises a base portion 6a having a first fitting hole 10 in which the electrode portion 5 is inserted, a body portion 6b jointed to the base portion 6a, and a tip portion 6c joined to the body portion 6b. It is preferable that the base portion 6a, the body portion 6b, and the tip portion 6c of the seed retaining member 6 be in a columnar shape rather than in a prismatic shape or the like because of the reason of the strength of the entire member in addition to the reason that voltage can be applied uniformly over the entire member in passing electric current therethrough. It is more preferable that the minimum distance from the axial center of the body portion 6b of the seed retaining member 6 to the outer peripheral surface thereof be 1.5 cm or greater, and that the maximum distance be within 5 cm. It is more preferable that the tip portion 6c have a conical frustum shape. The reason is that, in the separation work between the seed retaining member 6 and the polycrystalline silicon, the seed retaining member can be taken out easily because the amount of the graphite is smaller.

A gas vent hole 11 is formed in the base portion 6a. A second fitting hole 13 in which the lower end portion of the seed 4 is inserted is formed in the tip portion 6c. The second fitting hole 13 has an opening in the tip end face and extends along the axial center of the seed retaining member 6. A through hole 14 is formed in the tip portion 6c. A securing screw 15 for securing the seed 4 inserted in the second fitting hole 13 is screwed into the through hole 14.

What should be noted here is that the seed retaining member 6 has a groove for breaking and separating 16 formed in its outer peripheral surface. Because the groove 16 for breaking and separating is formed, a weak point in strength is allowed to exist. For this reason, when breaking the seed retaining member 6, stress concentration occurs at the groove 16 for breaking and separating by a breaking load, so the breaking-and-separating work becomes possible with a smaller load than conventional. Also, the developed crack propagates in a certain direction along the groove 16 for breaking and separating, As a result, the seed retaining member can be broken while the crack can be prevented from propagating in an undesired direction. Thus, formation of fragments containing the seed retaining member and the polycrystalline silicon can be prevented, so the breaking-and-separating work can be lightened.

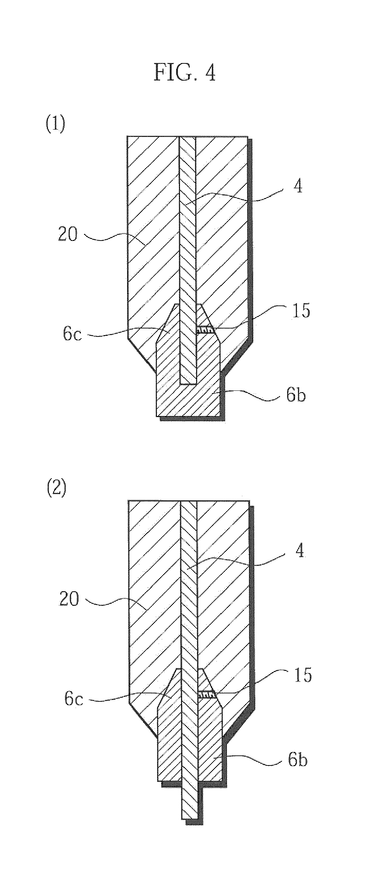

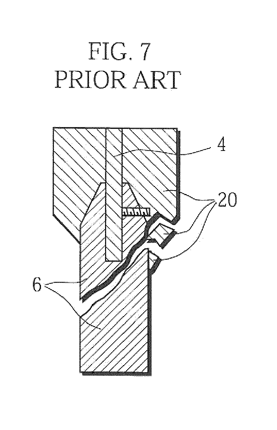

In the case of the present embodiment, in which the groove 16 for breaking and separating is formed below the lower end of the seed 4 that is inserted in the seed retaining member 6, the resulting crack condition is as shown in Fig. 4(1). In the case where the groove 16 for breaking and separating is above the lower end of the seed 4 that is inserted in the seed retaining member 6 (i.e., in the case of the later-described experimental example), the resulting crack condition is as shown in Fig. 4(2). In either case of the crack conditions of Figs. 4(1) and 4(2), the seed retaining member can be prevented from developing a crack in the location in which the polycrystalline silicon crystal deposited on the seed surface has been grown so as to cover the seed retaining member as shown in Fig. 7 and from producing fragments containing graphite and silicon, whereby the workload in the separation work between the seed retaining member and the polycrystalline silicon can be reduced remarkably.

Next, specific details of the groove 16 for breaking and separating are given regarding the groove depth, the groove shape, the height direction-wise location at which the groove is formed, and the circumference-wise location at which the groove is formed.

### (1) The groove depth of the groove 16 for breaking and separating

The groove depth is not particularly limited, and the depth of the groove may be determined corresponding to the outer diameter of the seed retaining member 6 by calculating the load based on the stress concentration when breaking.

### (2) The groove shape of the groove 16 for breaking and separating

The groove shape may be any kind of shape. For example, it is possible to employ any of a circular round groove, an angular groove, and a V-shaped groove.

### (3) The height-direction-wise location at which the groove 16 for breaking and separating is formed

It is preferable that the groove 16 for breaking and separating be formed below a grown portion of the silicon crystal that has been grown from the seed surface and deposited on the surface of the seed retaining member 6. In other words, it is preferable that the height direction-wise location at which the groove 16 for breaking and separating is formed should be in a region below the portion in which the polycrystalline silicon deposited on the seed surface has grown so as to cover the tip portion surface of the seed retaining member 6.
It is more preferable that the groove 16 for breaking and separating be formed more than 30 mm below the tip of the seed retaining member 6. The reason is that it is rare to carry out the deposition work until the deposited polycrystalline silicon crystal grows into a state in which it covers the seed retaining member 6 more than 30 mm from the tip thereof.
Moreover, when the groove for breaking and separating is above the through hole 14 for inserting the securing screw 15, the work will be easier at the time of taking the seed retaining member 6 out of the silicon crystal.

### (4) The circumference-wise location at which the groove 16 for breaking and separating is formed

The circumference-wise location at which the groove for breaking and separating is formed may be either the entire circumference in the outer peripheral surface of the seed retaining member 6 or a portion thereof.

It should be noted that the groove 16 for breaking and separating may extend along the circumference of the seed retaining member 6 (in other words, the groove 16 for breaking and separating may exist within a plane inclined with respect to the axial center of the seed retaining member 6), or more preferably, the groove 16 for breaking and separating may exist within a plane perpendicular to the axial center of the seed retaining member 6.

Next, a method of manufacturing polycrystalline silicon using the manufacturing apparatus having the above-described configuration will be described. The polycrystalline silicon is manufactured basically in the same manner as used in the conventional example. Specifically, electric current is applied to the seed 4 through the electrode 5 and the seed retaining member 6 to heat the surface to 1000°C or higher so as to become red-hot. The source gas supplied into the furnace is bought into contact wish the surface of the seed 4 that has become red-hot and is thermally decomposed or hydrogen-reduced, to deposit polycrystalline silicon on the surface of the seed 4. This reaction proceeds, resulting in growth of polycrystalline silicon rods.

Then, after the deposition of the polycrystalline silicon, the seed retaining member 6 is broken at the groove 16 for breaking and separating, and the seed 4 on which polycrystalline silicon has been deposited is taken out of the furnace. At this time of breaking in which a breaking load is applied to the seed retaining member 6, stress concentration occurs at the groove 16 for breaking and separating, so the breaking-and-separating work can be carried out with a smaller load than conventional. Moreover, the crack propagates along the groove. As a result, the seed retaining member can be prevented from developing a crack in the location in where the polycrystalline silicon crystal deposited and adhered onto the surface of the seed retaining member has been grown and from producing fragments containing graphite and silicon, and the workload in the separation work between the seed retaining member and the polycrystalline silicon can be reduced remarkably.

In the above-described example of manufacturing, after the deposition of the polycrystalline silicon, the seed retaining member 6 is broken at the groove 16 for breaking and separating, and then the seed 4 on which the polycrystalline silicon has been deposited is taken out of the furnace. However, it is also possible that after the deposition of polycrystalline silicon, the seed retaining member 6 retaining the seed 4 may be removed from the electrode portion 5 and taken out of the furnace, and thereafter, the seed retaining member 6 retaining the seed 4 may be broken at the groove 16 for breaking and separating, to perform the separation work of the seed retaining member and the polycrystalline silicon.

### (Experimental Example)

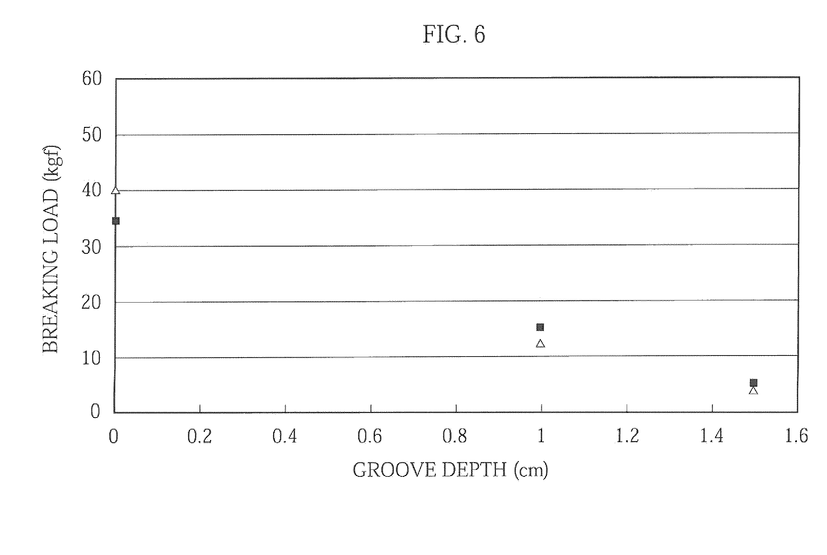

Three types of seed retaining members 6 as illustrated in Fig. 5 were prepared, in which the load span was set at 1 m, the groove 16 for breaking and separating was formed along the entire circumference, and the groove depths were set at 0 cm, 1.0 cm, and 1.5 cm, respectively. A load was applied to each of the seed retaining members 6 to determine the breaking load. The results are shown in Table 1 and Fig. 6.
The seed retaining members 6 used in the present experiment was ones having no base portion 6a and a columnar shape with a constant diameter as shown in Fig. 5. In the present experiment, the samples without the through hole 14 were also subjected to the same experiment, as the samples with the through hole 14. The results are also shown in Table 1 and Fig. 6. In Fig. 6, the triangular marks represent the measurement values of breaking load for the samples with the through hole 14, and the square marks represent the measurement values of breaking load for the samples without the through hole 14.

**[TABLE 1]**

| Diameter of the body portion 6b of the seed retaining member (cm) | Groove depth (cm) | Diameter of the seed retaining member at the portion where the groove is formed (cm) | Load span (cm) | Breaking load (Kgf) | |
|---|---|---|---|---|---|
| | | | | With through hole 14 | Without through hole 14 |
| 5 | 0 | 5 | 100 | 40 | 35 |
| 5 | 1.0 | 3 | 100 | 12 | 15 |
| 5 | 1.5 | 2 | 100 | 4 | 5 |

### [Experiment Results]

As clearly seen from Table 1 and Fig. 6, as for the samples with the through hole 14, the sample having a groove depth of 0 cm (i.e., the sample in which the groove 16 for breaking and separating was not formed) showed a breaking load of 40 kgf, the sample having a groove depth of 1.0 cm showed a breaking load of 12 kgf, and the sample having a groove depth of 1.5 cm showed a breaking load of 4 kgf. As for the samples without the through hole 14, the sample having a groove depth of 0 cm (i.e., the sample in which the groove 16 for breaking and separating was not formed) showed a breaking load of 35 kgf, the sample having a groove depth of 1.0 cm showed a breaking load of 15 kgf, and the sample having a groove depth of 1.5 cm showed a breaking load of 5 kgf. In the samples having a groove depth of 0 cm, a crack developed in the tip portion. In the samples having a groove depth of 1.0 cm and 1.5 cm, a crack developed from the groove 16 for breaking and separating with a smaller load than that required by the samples in which the groove 16 for breaking and separating was not formed.

### [Analysis of the Experiment Results]

(1) From the above-described experiment results, it is observed that because the groove 16 for breaking and separating was formed, stress concentration occurred at the groove when applying a breaking load, and the crack developed at the groove with a smaller load than conventional. Moreover, it is observed that the advantageous effect of the present application was obtained that the crack propagates in a certain direction along the groove, so the breaking-and-separating work can be performed while the propagation of the crack in an unexpected direction in the seed retaining member.
(2) It is observed that when the outer diameter of the seed retaining member 6 at the location where the groove 16 for breaking and separating is formed is smaller, the breaking load is smaller. Therefore, if the groove 16 for breaking and separating is formed with such a groove depth that the outer diameter of the seed retaining member 6 becomes extremely small at the location where the groove is formed (for example, if the groove depth exceeds 1.5 cm in the above-described experiment), the strength of the seed retaining member 6 is so weak that the seed retaining member 6 may break with an unintended impact. Moreover, when applying electric current, it is likely that excessive voltage may be applied to the portion where the groove is formed and the overheating problem is caused. If overheating takes place in a portion of the seed retaining member 6, the heat may cause silicon crystal to melt. Accordingly, it is preferable that the groove depth be set within a certain range if it is necessary that the seed retaining member should have at least a strength to such a degree that it does not break with an unintended impact and that the overheating problem in applying electric current, which results from the excessive voltage applied to the portion where the groove is formed, should be prevented, in addition to obtaining the advantageous effect of the present application, in which the seed retaining member can crack with a smaller load than conventional, at the location where the groove 16 for breaking and separating is formed and moreover the crack propagates along the groove so that the breaking-and-separating work can be performed while the crack is prevented from propagating in an unintended location of the seed retaining member 6. For example, it is preferable that the groove depth be about 1.0 cm in the case of the above-described experiment, in which the outer diameter of the seed retaining member 6 is set at 5 cm. It is more preferable that the depth of the groove be from about 0.7 cm to about 1.5 cm.

It is also observed from Table 1 and Fig. 6 that there was almost no difference in breaking load between the samples with the through hole 14 and the samples without the through hole 14. Therefore, it is believed that the through hole 14 has no influence on the fracture strength.

### (Other Embodiments)

In the foregoing embodiment, the seed retaining member 6 comprises the base portion 6a, the body portion 6b, and the conical frustum-shaped tip portion 6c, but the shape of the seed retaining member 6 is not limited thereto. For example, it is possible that the tip portion 6c may not have a conical frustum shape, but it has such a structure that the body portion 6b is extended upward with a constant diameter.

### INDUSTRIAL APPLICABILITY

The present invention makes it possible to perform the breaking-and-separating work with a smaller load than conventional by forming a groove for breaking and separating at an arbitrary location to cause stress concentration at the groove. Moreover, the present invention allows a crack to propagate along the groove and the breaking-and-separating work to be performed while preventing the cracks at unintended locations in the seed retaining member. The present invention is applicable to a seed retaining member and a method of manufacturing polycrystalline silicon using the seed retaining member.

### DESCRIPTION OF REFERENCE NUMERALS

- 1: Reaction furnace
- 4: Seed
- 5: Electrode portion
- 6: Seed retaining member
- 6a: Base portion
- 6b: Body portion
- 6c: Tip portion
- 10: First fitting hole
- 13: Second fitting hole
- 14: Through hole
- 15: Securing screw

- 16: Groove for breaking and separating
- 20: Silicon deposition portion

## Claims

1. A seed retaining member, made of graphite and attached to an electrode portion disposed at a bottom portion of a furnace for producing polycrystalline silicon by a Siemens method, for retaining a lower end portion of a seed serving as a seed rod, **characterized by** having a recessed portion for breaking and separating, formed at an arbitrary location in an outer peripheral surface thereof.

2. The seed retaining member according to claim 1, wherein the recessed portion is a groove for breaking and separating.

3. The seed retaining member according to claim 2, wherein the groove for breaking and separating is formed in an entire circumference of the seed retaining member or a portion of the circumference.

4. The seed retaining member according to claim 2 or 3, wherein the groove for breaking and separating extends along the circumference of the outer peripheral surface of the seed retaining member.

5. The seed retaining member according to any one of claims 2 through 4, wherein the groove for breaking and separating is formed below a grown portion of the silicon crystal that has been grown from the seed surface and deposited on the surface of the seed retaining member.

6. The seed retaining member according to any one of claims 1 through 5, wherein a tip of the seed retaining member is formed in a conical frustum shape.

7. A method of manufacturing polycrystalline silicon by a Siemens method, comprising the steps of:
pre-forming a recessed portion for breaking and separating at an arbitrary location of an outer peripheral surface of a seed retaining member for retaining a lower end portion of a seed serving as a seed rod, and attaching the seed retaining member in which the recessed portion has been formed to an electrode portion disposed at a bottom portion of a furnace for manufacturing polycrystalline silicon;
depositing polycrystalline silicon on a surface of the seed;
after depositing polycrystalline silicon on the surface of the seed, breaking the seed retaining member at the recessed portion and taking the seed on which the polycrystalline silicon has been deposited out of the furnace; and
performing a separation work of the seed retaining member and the polycrystalline silicon from the seed that has been taken out of the furnace.

8. A method of manufacturing polycrystalline silicon by a Siemens method, comprising the steps of:
pre-forming a recessed portion for breaking and separating at an arbitrary location of an outer peripheral surface of a seed retaining member for retaining a lower end portion of a seed serving as a seed rod, and attaching the seed retaining member in which the recessed portion has been formed to an electrode portion disposed at a bottom portion of a furnace for manufacturing polycrystalline silicon;
depositing polycrystalline silicon on a surface of the seed;
after the depositing of polycrystalline silicon, removing the seed retaining member retaining the seed from the electrode portion and taking the seed retaining member retaining the seed out of the furnace; and
after taking the seed retaining member retaining the seed out of the furnace, breaking the seed retaining member with the seed being retained at the recessed portion to carry out a separation work of the seed retaining member and the polycrystalline silicon.

9. The method of manufacturing polycrystalline silicon according to claim 7 or 8, wherein the recessed portion is a groove for breaking and separating.
